# EUROPEAN PATENT SPECIFICATION

(11) **EP 0 834 796 B1**
(45) Date of publication and mention of the grant of the patent: **07.04.2004**
(21) Application number: 97307668.0
(22) Date of filing: 30.09.1997
(51) Int. Cl.: G06F 1/32, G06F 1/30

(54) **A computer system and control method for saving power**
Computersystem und Energiesparsteuerungsverfahren
Système d'ordinateur et procédé de commande d'économie d'énergie

(30) Priority: 30.09.1996 KR 9643103
(43) Date of publication of application: 08.04.1998
(73) Proprietor: Samsung Electronics Co., Ltd., Suwon-city, Kyungki-do 441-370 (KR)
(72) Inventor: Ryu, Chang-Hyun, Boondang-gu, Seungnam-city, Kyunggi-do (KR)
(74) Representative: Tunstall, Christopher Stephen

(56) References cited:
- EP-A- 0 365 128
- EP-A- 0 704 804
- US-A- 4 907 183
- PATENT ABSTRACTS OF JAPAN vol. 017, no. 087 (P-1491), 22 February 1993 & JP 04 287108 A (OKI ELECTRIC IND CO LTD), 12 October 1992,

## Description

The present invention relates to a portable computer system and a method of controlling a peripheral device, such as a hard disk drive, to save battery power.

US 4907183 and EP 0704804 both describe how power off may be controlled to either a peripheral device or to a whole computer system respectively in order to conserve battery power.

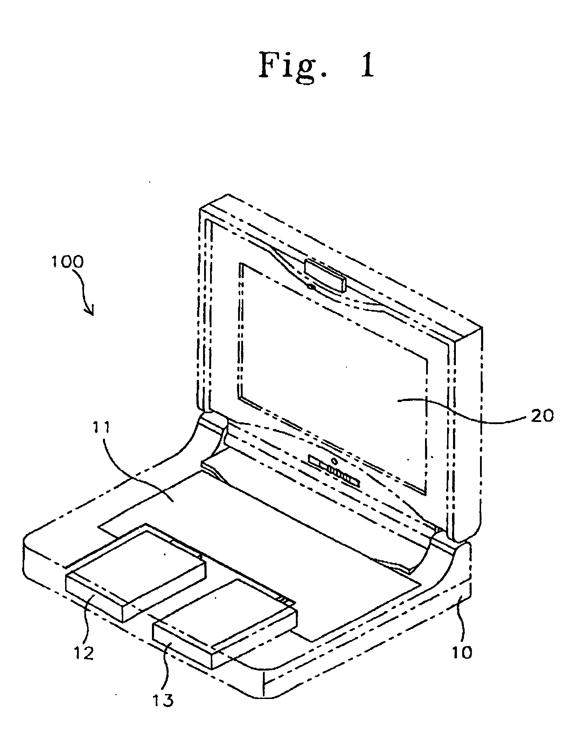

In more detail Fig. 1 shows a schematic perspective view of a computer system operated by a battery. The computer system includes a main body 10 housing a main board 11 for computing data, performing programs and controlling the system, a display 20 which displays information relating to the operation of the computer system, a hard disk drive 12 ("HDD") in which are stored system operating programs and other application programs and software, various data, etc, and a battery 13 which supplies power to operate the system. A CD-ROM drive (not shown) also may be mounted in the computer system to enable users to access other data and programs, if necessary.

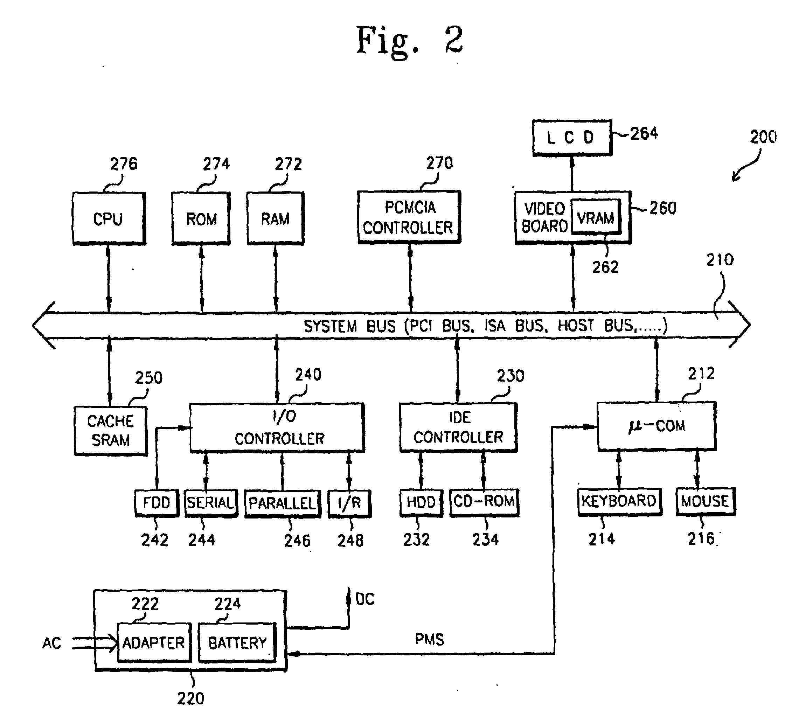

FIG. 2 schematically illustrates a block diagram of the computer system, in which the portable computer system generally comprises the following components. System buses 210, for example a peripheral component interconnect (PCI) bus, an industry standard architecture (ISA) bus, etc, interface various signals and data to allow target components to compute data, perform programs and control the system. An input-output (I/O) controller 240 controls various ports, for example a serial port 244, a parallel port 246, an infrared (I/R) port, etc and a floppy disk drive (FDD) 232. An integrated device electronics (IDE) controller 230 controls a hard disk drive (HDD) 232 and a CD-ROM drive 234. A personal computer memory card international association (PCMCIA) 270, a static random access memory (SRAM) 250, a read only memory (ROM) 272 and a random access memory (RAM) 272 are also provided as internal components. A central processing unit (CPU) 276 and a microcomputer 212 controls a keyboard 214 and a mouse 216 for inputting data and control parameters and controls the operation of the system. A power supply portion 220 includes an adaptor 222 electrically connected to an outer power source and a battery 224.

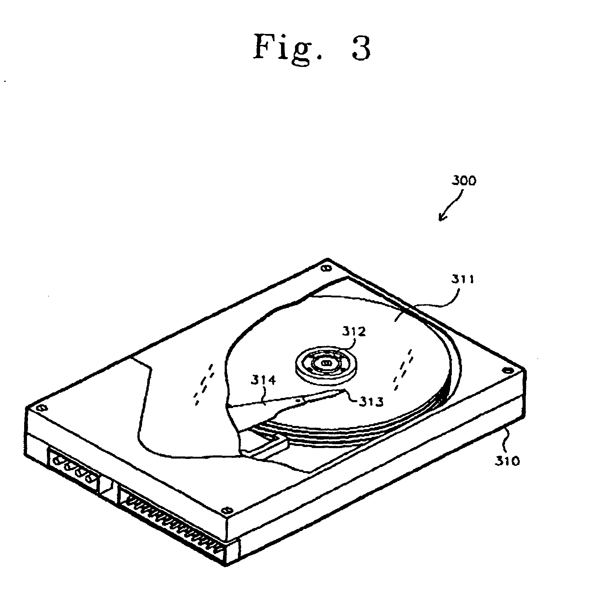

Referring to FIG. 3 which illustrates a schematic of the configuration of a normal hard disk drive which can be adapted to a computer system of the invention, a body 310, a disk 311 containing data, a spindle motor 312 for rotating the disk 311 and a head 313 coupled with an actuator 314, which is mounted in the HDD body 310, for reading data therefrom or writing data thereon during data accessing operations are provided. A control circuit portion including a controller is provided in the body 310 to control the power source supplied and the operation of the HDD, which is not shown.

The portable computer system is activated by a commercial power source (AC 110-220 Volts) using the adapter or the battery, but only the battery operated computer system will be described below.

The battery activated portable computer system is limited in the length of time for which it can be used. In that case, it is important to extend the use time of the battery. Also, it is very important to determine whether the charged battery voltage reaches a first low battery voltage level, lower than the normal operating voltage level, or a second low battery voltage level, lower than the first low battery voltage level. If the portable computer system is used with the battery, it causes the loss of user information and data owing to power being turned off followed by the discharging of the battery, when information being used and newly generated data is not memorized.

To resolve these problems, the normal portable computer system is set up with many system modes to decrease the power consumption of the battery. The computer system provides functions to automatically store data being used and then turn off the system to prevent the loss of data due to the dropping of the battery voltage level. In other words, the power system modes are set to decrease the power consumption of the battery as indicated in tables 1 and 2.

| | | | | |
|---|---|---|---|---|
| The computer system forces components to be activated according to the power save mode as follows: | | | | |

| Mode | HDD Portion | LCD Portion | CPU | Main System |
|---|---|---|---|---|
| NORMAL | ON | ON | ON | ON |
| SYSTEM STANDBY | STANDBY | OFF | STOP CLOCK | ON |
| HDD STANDBY | STANDBY | ON | Don't Care | ON |
| SUSPEND RAM | OFF | OFF | OFF | ON |
| POWER-OFF | OFF | OFF | OFF | OFF |

| | | |
|---|---|---|
| The hard disk drive system forces components to be activated according to the power save mode as follows: | | |

| Mode | Mechanism Portion (Actuator Portion) | System Portion (Circuit Portion) |
|---|---|---|
| ON | ON | ON |
| STANDBY | OFF | ON |
| POWER-OFF | OFF | OFF |

Referring to Tables 1 and 2, it is known that the major components of the computer system and the hard disk drive system are set at different operating modes, respectively, to decrease the power consumption. The hard disk drive system is maintained in a standby mode cutting off the power supplied to the mechanism including the spindle motor 312 and the actuator 314, but its control circuit portion including the controller is maintained in the ON mode.

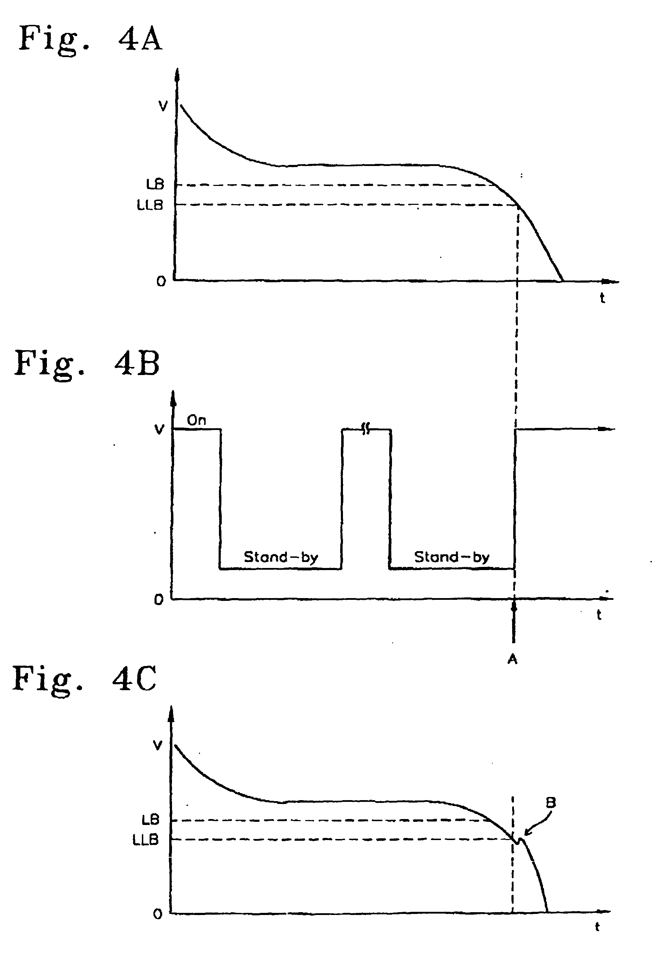

The computer system also performs a hibernation function to prevent the loss of data, when the battery voltage level decreases due to long use of the battery. The hibernation function now will be explained referring to FIG. 4A to FIG. 4C, with the hard disk drive 300 is set at the standby mode.

As the output voltage level of the battery drops to a first low battery voltage level because of the length of time in use, the mechanism portion including the spindle motor 312 and the actuator 314 is set to the standby mode, cutting off the power as shown in FIG. 4B. Thereafter, when the battery level drops from the first low battery voltage level (LB) to the second low battery voltage level (LLB), the microcomputer 212 detects the LLB of the battery output voltage level and generates a system management interrupt (SMI) commanding the hibernation function. In response to the SMI, the CPU 276 forces the power source to be supplied to the spindle motor 312 and the actuator 314. At that time, the hard disk drive 300 is activated to enable the computer system to store information and data on the hard disk 311 and then to turn off the power source, thus preventing the loss of data.

However, if the computer system performs the hibernation function of activating the hard disk drive at the second low battery voltage level, storing current information and data and then turning off the power source, the amount of power drawn is abruptly increased according to the operation of the mechanism portion. This means that the computer system must use a relatively high voltage level above the second low battery voltage level that the power is corresponding to the output voltage level of the battery. Owing to this, the system power source is cut off, and the computer system is shut down, thus resulting in the loss of the user's information.

To deal with these advantages, an object of the invention is to provide a computer system and a control method for controlling a hard disk drive to save battery power.

According to a first aspect of the present. invention there is provided a method of controlling a portable computer system including a battery, a main system and at least one peripheral data storage device, the method comprising:
entering a power-saving mode in which the supply of power to the peripheral device is interrupted when the battery voltage level is at a normal voltage level; characterised by
resuming the supply of power to the peripheral device when the battery voltage level drops below a first reference voltage level Vref LB lower than the normal voltage level; and
storing current data in the peripheral device when the battery voltage level drops below a second reference voltage level Vref LLB lower than the first reference voltage level.

Preferably, the method further comprises, after storing the currant data, entering a power-off mode in which the supply of power to both the main system and the peripheral device is interrupted. The peripheral device may be a hard disk drive.

The method according to the invention may comprise:
determining whether an external power source is connected to the computer system;
if so, entering the power saving mode; and
if not:
   determining whether the voltage level of the battery is normal and, if so, entering the power saving mode;
   determining whether the voltage level of the battery drops below the first reference voltage level
   and, if so, disabling the power saving mode.

The method may further comprise:
determining whether the voltage level of the battery drops below the second reference voltage level and, if so, storing the current state of the computer system in the peripheral device and turning off the supply of power from the battery.

According to a second aspect of the present invention there is provided a portable computer system including a battery, a main system and at least one peripheral data storage device, the computer system being arranged:
to enter a power-saving mode in which the supply of power to the peripheral device is interrupted when the battery voltage level is at a normal voltage level; and characterised in that the computer system is further arranged to resume the supply of power to the peripheral device when the battery voltage level drops below a first reference voltage level (Vref LB) lower than the normal voltage level; and
to store current data in the peripheral device when the battery voltage level drops below a second reference voltage level (Vref LLB) lower than the first reference voltage level (Vref LB).

Preferably, the portable computer system comprises:
voltage level detecting means for detecting the output voltage level of the battery;
switching means connected between the battery and the peripheral device for tuning the peripheral device on and off;
battery charging state determining means for receiving a voltage level signal from the voltage level detecting means, comparing it with the first reference voltage level to determine the charging state of the battery and outputting a control signal accordingly; and
control means for controlling the turning on and off of the switching means in response to the said control signal.

Therefore, the invention can prevent the steep increase of power consumption at the second low battery voltage level and the loss of users' information and data owing to the interruption of the power supply before the current state is stored and can extend the operating time of the computer system.

The present invention will now be described by way of example with reference to the accompanying drawings in which:
FIG. 1 is a schematic perspective view illustrating a portable computer system;
FIG. 2 is a schematic block diagram illustrating the configuration of the computer system;
FIG. 3 is a schematic perspective view illustrating the configuration of a hard disk drive;
FIG. 4A is a graph illustrating the output level change of a battery based on the use time of the computer system;
FIG. 4B is a graph illustrating the driving voltage level of the HDD;
FIG. 4C is a timing diagram showing the change in output level of a battery based on the use time of the computer system;
FIG. 5 is a schematic block diagram illustrating the configuration of the computer system according to the invention;
FIG. 6 is a detailed view illustrating a voltage level detecting portion of the computer system according to the invention; and
FIGs. 7A and 7B are a flow chart illustrating the operation of the computer system according to the invention.

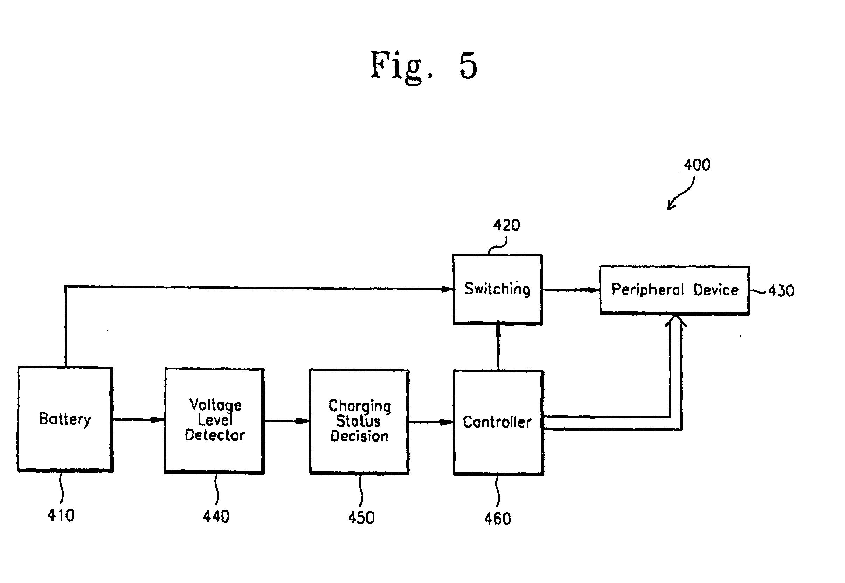

Referring to FIG. 5, a portable computer system comprises a battery 410 for supplying the power source to operate the system and at least one peripheral device 430. A voltage level detecting portion 440 is connected to the battery 410 to detect the output voltage level. A switching portion 420 is provided between the battery 410 and the peripheral device 430 to turn on/off the peripheral device. A battery charging state determining portion 450 is connected to the voltage level detecting portion 440 to receive a voltage level signal, compare the received voltage level with a reference voltage level, determine the charging state of the battery 410 and output an interrupt signal (SMI). A control portion 420 controls the turning on or off of the switching portion 420 in response to the control signal (SMI). Herein, it is noted that the peripheral device is such as a hard disk drive or a CD ROM drive.

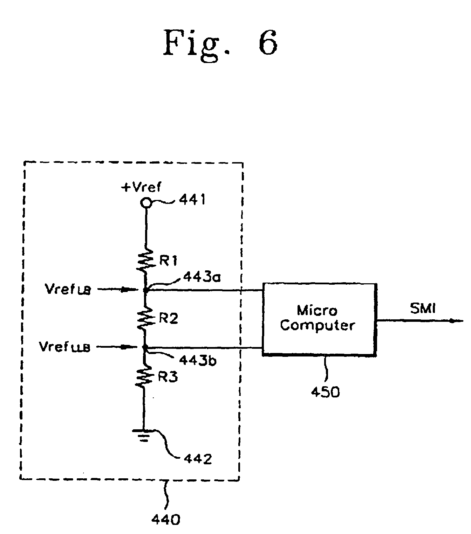

FIG. 6 shows a detailed circuit of the voltage level detecting portion 440. As shown in FIG. 6, the voltage level detecting portion 440 includes a voltage terminal 441 and a ground terminal 442, respectively connected to both polarities of the battery 410. First, second and third resistors R1, R2, R3 are arranged in turn between the voltage terminal 441 and the ground terminal 442. First node 443a is formed between the first and second resistors R1, R2 and the second node 443b is formed between the second and third nodes R2, R3. The first and second nodes 443a, 443b are each connected to the input port of the battery charging state determining portion 450 constituted by a microprocessor. Therefore, the first node 443a is considered as a first reference voltage level VrefLB indicating a first low battery voltage level, and the second node 443b is subject to be a second reference voltage level VrefLLB representing a second low battery voltage level lower than the first low battery voltage level.

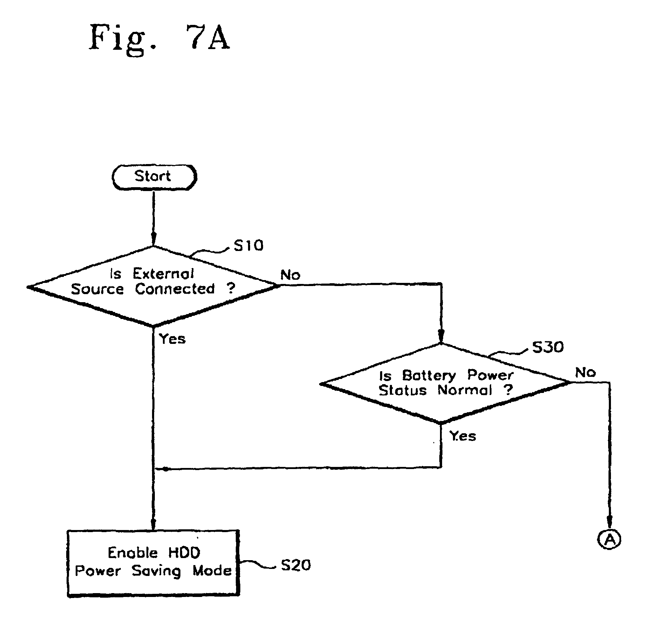

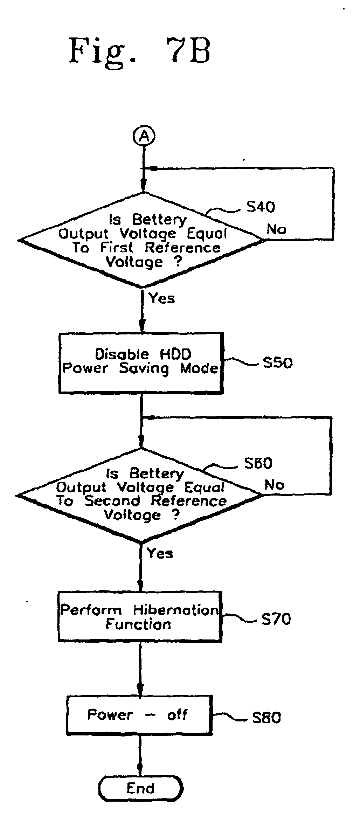

The computer system is operated as shown in FIGs. 7A and 7B. In that case, the peripheral device 430 is a hard disk drive, but the invention is not limited to hard disk drives. The method by which the computer system controls the peripheral device is as follows.

The portable computer system 400 first performs a procedure for determining whether an external power source is connected to it at step S10. A power saving mode of the peripheral device 430 is enabled at step S20, if an external source exists. The output voltage level of the battery 410 is detected, if the external source does not exist, and then it is determined at step S30 whether the output voltage level of the battery 410 is the normal operating voltage of the system. The power saving mode of the peripheral device 430 is enabled, as at step S30, if the output voltage level is normal.

It is then determined at step S40 whether the output voltage level is equal to the first reference voltage VrefLB, when the output voltage level of the battery 410 is not the normal operating voltage of the system. The output voltage level is continuously detected until it drops to the first reference voltage VrefLB.

Next, the power saving mode of the peripheral device 430 is disabled and again the power voltage of the battery 410 is applied to the peripheral device at step S50, if the output voltage level is equal to the first reference voltage VrefLB. Thereafter, step S50 is performed and the output level of the battery 410 is detected. It is determined at step S60 whether the output voltage level is equal to the second reference one VrefLLB.

The computer system 400 stores current information and data being used into the peripheral device 410 at step S70, if the output voltage level of the battery is equal to the second reference one VrefLLB. On the other hand, the output voltage level of the battery is monitored until it reaches the second reference voltage VrefLLB at step S60, if the output voltage level is not equal to the second reference one VrefLLB. After performing step S70, the computer system stores current information data and turns itself off.

As described above, the invention resolves the problems mentioned above as follows. The amount of power used by the computer system is relatively higher than that of the battery, if the computer system activates a peripheral device and stores current data when the output voltage level of the battery is the second low battery voltage level. Owing to this, the system power source is cut off, and the computer system is shut down, resulting from the loss of the user's information and data.

On the contrary, according to the invention, a portable computer system first activates the peripheral device when the output voltage level is at a first low battery voltage level higher than the second low battery voltage level. Also the portable computer system stores the current state when the output voltage level is at the second low battery voltage level. Therefore, the invention can prevent the steep increase of the amount of power consumed at the second low battery voltage level and the loss of the users' information and data, due to the turning off of the power source before the current state is stored and extend the operating time of the computer system.

## Claims

1. A method of controlling a portable computer system including a battery (410), a main system and at least one peripheral data storage device (430), the method comprising:
entering a power-saving mode in which the supply of power to the peripheral device is interrupted when the battery voltage level is at a normal voltage level; **characterised by**
resuming the supply of power to the peripheral device (430). when the battery voltage level drops below a first reference voltage level (Vref LB) lower than the normal voltage level; and
storing current data in the peripheral device when the battery voltage level drops below a second reference voltage level (Vref LLB) lower than the first reference voltage level.

2. A method according to claim 1 further comprising, after storing the current data, entering a power-off mode in which the supply of power to both the main system and the peripheral device (430) is interrupted.

3. A method according to claim 1 or claim 2 in which the peripheral device is a hard disk drive.

4. A method according to any preceding claim comprising:
determining whether an external power source is connected to the computer system;
if so, entering the power saving mode; and
if not:
determining whether the voltage level of the battery is normal and, if so, entering the power saving mode;
determining whether the voltage level of the battery drops below the first reference voltage level (Vref LB) and, if so, disabling the power saving mode.

5. A method according to claim 4 further comprising:
determining whether the voltage level of the battery (410) drops below the second reference voltage (Vref LLB) and, if so, storing the current state of the computer system in the peripheral device (430) and turning off the supply of power from the battery (410).

6. A portable computer system including a battery (410), a main system and at least one peripheral data storage device (430), the computer system being arranged:
to enter a power-saving mode in which the supply of power to the peripheral device is interrupted when the battery voltage level is at a normal voltage level; and **characterised in that** the computer system is further arranged to resume the supply of power to the peripheral device when the battery voltage level drops below a first reference voltage level (Vref LB) lower than the normal voltage level; and
to store current data in the peripheral device (430) when the battery voltage level drops below a second reference voltage level (Vref LLB) lower than the first reference voltage level (Vref LB).

7. A portable computer system according to claim 6 wherein said system is arranged, subsequent to the storage of said current data, to enter a power-off mode in which the supply of power to both the main system and the peripheral device (430) is interrupted.

8. A portable computer system according to claim 6 comprising:
voltage level detecting means (440) for detecting the output voltage level of the battery;
switching means (420) connected between the battery (410) and the peripheral device (430) for tuning the peripheral device on and off;
battery charging state determining means (450) for receiving a voltage level signal from the voltage level detecting means, comparing it with the first reference voltage level (Vref LB) to determine the charging state of the battery and outputting a control signal (SMI) accordingly; and
control means (420) for controlling the turning on and off of the switching means in response to the said control signal.

9. A portable computer system according to claim 6, 7 or claim 8 in which the peripheral data storage device is hard disk drive.

## Patentansprüche

1. Ein Verfahren zur Steuerung eines tragbaren Computersystems mit einer Batterie (410), einem Hauptsystem und mindestens einem Peripheriegerät zur Datenspeicherung (430), wobei das Verfahren folgendes umfasst:
in einen Energiesparmodus überzugehen, in dem die Energieversorgung des Peripheriegeräts unterbrochen wird, wenn der Spannungspegel der Batterie auf einem normalen Spannungspegel steht; **dadurch gekennzeichnet, dass**
die Energieversorgung des Peripheriegeräts (430) wieder aufgenommen wird, wenn der Spannungspegel der Batterie unter einen ersten Referenzspannungspegel (Vref LB) fällt, der niedriger ist als der normale Spannungspegel; und
aktuelle Daten im Peripheriegerät gespeichert werden, wenn der Spannungspegel der Batterie unter einen zweiten Referenzspannungspegel (Vref LLB) fällt, der niedriger ist als der erste Referenzspannungspegel.

2. Ein Verfahren gemäß Anspruch 1, das außerdem umfasst, nach Speichern der aktuellen Daten in einen Abschaltmodus überzugehen, in dem sowohl die Energieversorgung des Hauptsystems als auch des Peripheriegeräts (430) unterbrochen wird.

3. Ein Verfahren gemäß Anspruch 1 oder Anspruch 2, in dem das Peripheriegerät ein Festplattenlaufwerk ist.

4. Ein Verfahren gemäß allen vorhergehenden Ansprüchen, das folgendes umfasst:
zu bestimmen, ob eine externe Energiequelle an das Computersystem angeschlossen ist;
wenn dies der Fall ist, in einen Energiesparmodus überzugehen; und,
wenn dies nicht der Fall ist:
zu bestimmen, ob der Spannungspegel der Batterie normal ist, und, wenn dies der Fall ist, in einen Energiesparmodus überzugehen;
zu bestimmen, ob der Spannungspegel der Batterie unter den ersten Referenzspannungspegel (Vref LB) fällt und, wenn dies der Fall ist, den Energiesparmodus zu deaktivieren.

5. Ein Verfahren gemäß Anspruch 4, das außerdem umfasst:
zu bestimmen, ob der Spannungspegel der Batterie (410) unter den zweiten Referenzspannungspegel (Vref LLB) fällt, und, wenn dies der Fall ist, den aktuellen Zustand des Computersystems im Peripheriegerät (430) zu speichern und die Energieversorgung durch die Batterie (410) abzuschalten.

6. Ein tragbares Computersystem mit einer Batterie (410), einem Hauptsystem und mindestens einem Peripheriegerät zur Datenspeicherung (430), wobei das Computersystem so angeordnet ist, dass:
es in einen Energiesparmodus übergeht, in dem die Energieversorgung des Peripheriegeräts unterbrochen wird, wenn sich der Spannungspegel der Batterie auf einem normalen Spannungspegel befindet, und **dadurch gekennzeichnet, dass** das Computersystem außerdem so angeordnet ist, dass es die Energieversorgung des Peripheriegeräts wieder aufnimmt, wenn der Spannungspegel der Batterie unter einen ersten Referenzspannungspegel (Vref LB) fällt, der niedriger ist als der normale Spannungspegel; und
es aktuelle Daten im Peripheriegerät (430) speichert, wenn der Spannungspegel der Batterie unter einen zweiten Referenzspannungspegel (Vref LLB) fällt, der niedriger ist als der erste Referenzspannungspegel (Vref LB).

7. Ein tragbares Computersystem gemäß Anspruch 6, wobei das besagte System so angeordnet ist, dass es nach der Speicherung der besagten aktuellen Daten in einen Abschaltmodus übergeht, in dem sowohl die Energieversorgung des Hauptsystems als auch des Peripheriegeräts (430) unterbrochen wird.

8. Ein tragbares Computersystem gemäß Anspruch 6, das folgendes umfasst:
ein Spannungspegel-Anzeigemittel (440), um den Ausgangsspannungspegel der Batterie anzuzeigen;
ein Schaltmittel (420), das zwischen der Batterie (410) und dem Peripheriegerät (430) geschaltet ist, um das Peripheriegerät ein- und abzuschalten;
ein Batterieladestatus-Bestimmungsmittel (450), um ein Spannungspegel-Signal vom Spannungspegel-Anzeigemittel zu empfangen, dies mit dem ersten Referenzspannungspegel (Vref LB) zu vergleichen und so den Ladestatus der Batterie zu bestimmen und ein dementsprechendes Steuersignal (SMI) auszugeben; und
ein Steuermittel (420) zur Steuerung des Ein- und Abschaltens des Schaltmittels als Reaktion auf das besagte Steuersignal.

9. Ein tragbares Computersystem gemäß Anspruch 6, 7 oder Anspruch 8, in dem das Peripheriegerät zur Datenspeicherung ein Festplattenlaufwerk ist.

## Revendications

1. Méthode pour commander un système informatique portable comprenant une pile (410), un système principal et au moins un dispositif périphérique de stockage des données (430), cette méthode comprenant :
l'entrée dans un mode d'économie d'énergie dans lequel l'alimentation d'énergie au dispositif périphérique est interrompue lorsque le niveau de tension dans la pile est au niveau de tension normal ; **caractérisée par**
le rétablissement de l'alimentation d'énergie au dispositif périphérique (430) lorsque le niveau de tension de la pile tombe en dessous d'un premier niveau de tension de référence (Vref LB) inférieur au niveau de tension normal ; et
le stockage des données courantes dans le dispositif périphérique lorsque le niveau de tension de la pile tombe en dessous d'un deuxième niveau de tension de référence (Vref LLB) inférieur au premier niveau de tension de référence.

2. Méthode selon la revendication 1 qui comprend également, après le stockage des données courantes, l'entrée dans un mode hors tension dans lequel l'alimentation d'énergie au système principal et au dispositif périphérique (430) est interrompue.

3. Méthode selon la revendication 1 ou la revendication 2 dans laquelle le dispositif périphérique est une unité de disque dur.

4. Méthode selon l'une quelconque des revendications précédentes comprenant :
la détermination si une source d'énergie externe est connectée ou pas au système informatique ;
si c'est le cas, l'entrée dans le mode d'économie d'énergie ; et
si ce n'est pas le cas :
la détermination si le niveau de tension de la pile est normal ou pas et, si c'est le cas, l'entrée dans le mode d'économie d'énergie ;
la détermination si le niveau de tension de la pile tombe en dessous du premier niveau de tension de référence (Vref LB) et, si c'est le cas, l'invalidation du mode d'économie d'énergie.

5. Méthode selon la revendication 4 comprenant également :
la détermination si le niveau de tension de la pile (410) tombe ou pas en dessous de la deuxième tension de référence (Vref LLB) et, si c'est le cas, la mémorisation de l'état courant du système informatique dans le dispositif périphérique (430) et la coupure de l'alimentation d'énergie venant de la pile (410).

6. Système informatique portable comprenant une pile (410), un système principal et au moins un dispositif périphérique de stockage des données (430), le système informatique étant disposé de façon à :
entrer dans un mode d'économie d'énergie dans lequel l'alimentation d'énergie au dispositif périphérique est interrompue lorsque le niveau de tension de la pile est au niveau de tension normal, et **caractérisé en ce que** le système informatique est également disposé de façon à rétablir l'alimentation d'énergie au dispositif périphérique lorsque le niveau de tension de la pile tombe en dessous d'un premier niveau de tension de référence (Vref LB) inférieur au niveau de tension normal ; et
stocker les données courantes dans le dispositif périphérique (430) lorsque le niveau de tension de la pile tombe en dessous d'un deuxième niveau de tension de référence (Vref LLB) inférieur au premier niveau de tension de référence (Vref LB).

7. Système informatique portable selon la revendication 6 dans lequel ledit système est disposé, après le stockage desdites données courantes, de façon à entrer dans un mode hors tension dans lequel l'alimentation d'énergie au système principal et au dispositif périphérique (430) est interrompue.

8. Système informatique portable selon la revendication 6, comprenant :
un moyen de détection du niveau de tension (440) pour détecter le niveau de tension de sortie de la pile ;
un moyen de commutation (420) connecté entre la pile (410) et le dispositif périphérique (430) pour mettre le dispositif périphérique sous tension et hors tension ;
un moyen de détermination de l'état de charge de la pile (450) pour recevoir un signal de niveau de tension du moyen de détection du niveau de tension, le comparant avec le premier niveau de tension de référence (Vref LB) afin de déterminer l'état de charge de la pile et envoyant un signal de commande (SMI) en conséquence ; et
un moyen de commande (420) pour commander la mise sous tension et la mise hors tension du moyen de commutation en réponse audit signal de commande.

9. Système informatique portable selon la revendication 6, 7 ou 8 dans lequel le dispositif périphérique de stockage des données est une unité de disque dur.
